# EUROPEAN PATENT APPLICATION

(11) **EP 4 693 004 A1**
(43) Date of publication of application: **11.02.2026**
(21) Application number: 24784193.5
(22) Date of filing: 29.03.2024
(51) Int. Cl.: G06F 3/0481, G06F 3/0484

(54) **INTERFACE DISPLAY METHOD AND APPARATUS, MEDIA CONTENT PUBLISHING METHOD AND APPARATUS, AND MEDIA CONTENT PRESENTATION METHOD AND APPARATUS**

(30) Priority: 04.04.2023 CN 202310356247
(71) Applicant: Beijing Zitiao Network Technology Co., Ltd., Beijing 100190 (CN)
(72) Inventor: LIANG, Chenqi, Beijing 100028 (CN); HUANG, Jianjie, Beijing 100028 (CN); XU, Ning, Beijing 100028 (CN); LIN, Peiyin, Beijing 100028 (CN); XU, Hanzheng, Beijing 100028 (CN); CHEN, Shu, Beijing 100028 (CN); PAN, Yi, Beijing 100028 (CN); ZHAO, Yicong, Beijing 100028 (CN)
(74) Representative: Marks & Clerk LLP
(86) International application number: PCT/CN2024/084969
(87) International publication number: WO 2024/208109

(57) **Abstract**

The embodiments of the present disclosure provide an interface display method and apparatus, a media content posting method and apparatus, and a media content presentation method and apparatus. The interface display method includes: displaying an entry interface, the entry interface including a topic group interface trigger control; in response to a trigger operation for the topic group interface trigger control, displaying a topic presentation page of a topic group corresponding to the topic group interface trigger control; and presenting at least one piece of media content on the topic presentation page, the at least one piece of media content including media content posted by a group member joining in the topic group, and media content posted by an out-of-group member without joining in the topic group.

## Description

### CROSS-REFERENCE TO RELATED APPLICATION(S)

This application claims priority to Chinese Application No. 202310356247.6, filed in April 04, 2023, and entitled "Interface Display Method and Apparatus, Media Content Publishing Method and Apparatus, and Media Content Presentation Method and Apparatus", the disclosure of which is incorporated herein by reference in its entirety.

### FIELD

Embodiments of the present disclosure relate to the computer technology, and in particular to an interface display method and apparatus, a media content posting method and apparatus, and a media content presentation method and apparatus.

### BACKGROUND

At present, users may browse content of their interests or post content related to their interests through the Internet. However, with the enhancement in the richness and diversity of media content on the Internet, it is relatively difficult for the users to acquire useful information.

### SUMMARY

The present disclosure provides an interface display method and apparatus, a media content posting method and apparatus, and a media content presentation method and apparatus, so as to facilitate users to acquire useful information on the Internet.

In a first aspect, embodiments of the present disclosure provide an interface display method, including:
displaying an entry interface, the entry interface including a topic group interface trigger control;
in response to a trigger operation for the topic group interface trigger control, displaying a topic presentation page of a topic group corresponding to the topic group interface trigger control; and
presenting at least one piece of media content on the topic presentation page, the at least one piece of media content including media content posted by a group member joining in the topic group, and media content posted by an out-of-group member without joining in the topic group.

In a second aspect, the embodiments of the present disclosure further provide a media content posting method, including:
displaying, on a posting interface, a posting control and at least one piece of target topic information corresponding to media content to be posted;
determining a target topic group corresponding to the target topic information based on the target topic information; and
in response to a trigger operation for the posting control, posting the media content to be posted to a topic presentation page of the target topic group.

In a third aspect, the embodiments of the present disclosure further provide a media content presentation method, including:
presenting target media content on a content presentation interface corresponding to a target user, the content presentation interface including a display control; and
in response to a trigger operation for the display control, displaying a topic presentation page corresponding to the target media content, the topic presentation page being a presentation interface of a topic group to which the target media content presented on the content presentation interface belongs, and the target user including a group member in the belonging topic group and an out-of-group member outside the belonging topic group.

In a fourth aspect, the embodiments of the present disclosure further provide an interface display apparatus, including:
a first display module, configured to display an entry interface, the entry interface including a topic group interface trigger control;
a second display module, configured to display, in response to a trigger operation for the topic group interface trigger control, a topic presentation page of a topic group corresponding to the topic group interface trigger control; and
a presentation module, configured to present at least one piece of media content on the topic presentation page, the at least one piece of media content including media content posted by a group member joining in the topic group, and media content posted by an out-of-group member without joining in the topic group.

In a fifth aspect, the embodiments of the present disclosure further provide a media content posting apparatus, including:
a display module, configured to display, on a posting interface, a posting control and at least one piece of target topic information corresponding to media content to be posted;
a determination module, configured to determine a target topic group corresponding to the target topic information based on the target topic information; and
a posting module, configured to post, in response to a trigger operation for the posting control, the media content to be posted to a topic presentation page of the target topic group.

In a sixth aspect, the embodiments of the present disclosure further provide a media content presentation apparatus, including:
a presentation module, configured to present target media content on a content presentation interface corresponding to a target user, the content presentation interface including a display control; and
a display module, configured to display, in response to a trigger operation for the display control, a topic presentation page corresponding to the target media content, the topic presentation page being a presentation interface of a topic group to which the target media content presented on the content presentation interface belongs, and the target user including a group member in the belonging topic group and an out-of-group member outside the belonging topic group.

In a seventh aspect, the embodiments of the present disclosure further provide an electronic device, including:
one or more processing apparatuses; and
a storage apparatus, configured to store one or more programs, wherein
when the one or more programs are executed by the one or more processing apparatuses, the one or more processing apparatuses are caused to implement the method provided in the embodiments of the present disclosure.

In an eighth aspect, the embodiments of the present disclosure further provide a storage medium, including computer-executable instructions, wherein the computer-executable instructions, when executed by a computer processor, are configured to execute the method provided in the embodiments of the present disclosure.

In the embodiments of the present disclosure, by displaying the entry interface, the entry interface including the topic group interface trigger control; in response to the trigger operation for the topic group interface trigger control, displaying the topic presentation page of the topic group corresponding to the topic group interface trigger control; and presenting the at least one piece of media content on the topic presentation page, the at least one piece of media content including the media content posted by the group member joining in the topic group, and the media content posted by the out-of-group member without joining in the topic group, the problem of it being relatively difficult for a user to acquire useful information on the Internet is solved; and by providing the entry interface for the user, after the user triggers the topic group interface trigger control, the topic presentation page is displayed for the user, the media content posted by the group member joining in the topic group and the media content posted by the out-of-group member without joining in the topic group may be displayed in the topic presentation page, and the user may browse the media content related to the topic of the topic group in the topic presentation page, thereby facilitating the user to acquire the useful information on the Internet.

### BRIEF DESCRIPTION OF THE DRAWINGS

The above and other features, advantages and aspects of various embodiments of the present disclosure will become more apparent in combination with the drawings and with reference to specific implementations below. Throughout the drawings, the same or similar reference signs indicate the same or similar elements. It should be understood that the drawings are schematic and that original members and elements are not necessarily drawn to scale.
FIG. 1 is a schematic flowchart of an interface display method provided in an embodiment of the present disclosure;
FIG. 2 is a schematic flowchart of another interface display method provided in an embodiment of the present disclosure;
FIG. 3 is a schematic flowchart of a media content posting method provided in an embodiment of the present disclosure;
FIG. 4 is a schematic flowchart of a media content presentation method provided in an embodiment of the present disclosure;
FIG. 5 is a schematic flowchart of another media content presentation method provided in an embodiment of the present disclosure;
FIG. 6a is a schematic diagram of a content presentation interface provided in an embodiment of the present disclosure;
FIG. 6b is a schematic diagram of another content presentation interface provided in an embodiment of the present disclosure;
FIG. 6c is a schematic diagram of a media content posting process provided in an embodiment of the present disclosure;
FIG. 6d is a schematic diagram of posting media content provided in an embodiment of the present disclosure;
FIG. 6e is a schematic diagram of a preset channel interface provided in an embodiment of the present disclosure;
FIG. 6f is a schematic diagram of a group list interface provided in an embodiment of the present disclosure;
FIG. 6g is a schematic interface diagram of a topic presentation page provided in an embodiment of the present disclosure;
FIG. 7 is a schematic structural diagram of an interface display apparatus provided in an embodiment of the present disclosure;
FIG. 8 is a schematic structural diagram of a media content posting apparatus provided in an embodiment of the present disclosure;
FIG. 9 is a schematic structural diagram of a media content presentation apparatus provided in an embodiment of the present disclosure; and
FIG. 10 is a schematic structural diagram of an electronic device provided in an embodiment of the present disclosure.

### DETAILED DESCRIPTION OF EMBODIMENTS

Hereinafter, embodiments of the present disclosure will be described in more detail with reference to the drawings. Although some embodiments of the present disclosure have been illustrated in the drawings, it should be understood that the present disclosure may be implemented in various forms and should not be construed as being limited to the embodiments set forth herein; and rather, these embodiments are provided to help understand the present disclosure more thoroughly and completely. It should be understood that the drawings and embodiments of the present disclosure are for exemplary purposes only and are not intended to limit the protection scope of the present disclosure.

It should be understood that, various steps recorded in method embodiments of the present disclosure may be executed in different sequences and/or in parallel. In addition, the method embodiments may include additional steps and/or omit executing the steps shown. The scope of the present disclosure is not limited in this respect.

As used herein, the term "include" and variations thereof are open-ended inclusions, i.e., "including, but not limited to". The term "based on" is "based, at least in part, on". The term "an embodiment" means "at least one embodiment"; the term "another embodiment" means "at least one additional embodiment"; and the term "some embodiments" means "at least some embodiments". Relevant definitions of other terms will be given in the following description.

It should be noted that, concepts such as "first" and "second" mentioned in the present disclosure are only intended to distinguish different apparatuses, modules or units, and are not intended to limit the sequence or interdependence of functions executed by these apparatuses, modules or units.

It should be noted that, the modifiers such as "one" and "more" mentioned in the present disclosure are intended to be illustrative and not restrictive, and those skilled in the art should understand that the modifiers should be understood as "one or more" unless the context clearly indicates otherwise.

The names of messages or information interacted between a plurality of apparatuses in the embodiments of the present disclosure are for illustrative purposes only and are not intended to limit the scope of these messages or information.

It can be understood that, before technical solutions disclosed in the embodiments of the present disclosure are used, it is necessary to notify a user of types, usage ranges, usage scenarios and the like of personal information involved in the present disclosure in an appropriate manner according to related laws and regulations, and to obtain the authorization of the user.

For example, prompt information is sent to the user in response to receiving an initiative request of the user, so as to explicitly prompt the user that an operation which the user requests to execute needs to acquire and use the personal information of the user. Therefore, the user can autonomously choose, according to the prompt information, whether to provide the personal information for software or hardware such as an electronic device, a server or a storage medium, which executes operations of the technical solutions of the present disclosure.

As an optional but non-restrictive implementation, the manner of sending the prompt information to the user in response to receiving the initiative request of the user may be, for example, a pop-up window, and the prompt information may be presented in the pop-up window in a text manner. In addition, the pop-up window may also carry a selection control for enabling the user to choose "agreeing" or "disagreeing" to provide the personal information for the electronic device.

It can be understood that the above process of notifying and acquiring the authorization of the user is only schematic, does not constitute a limitation on the implementations of the present disclosure, and other manners satisfying related laws and regulations may also be applied to the implementations of the present disclosure.

It can be understood that data (including, but not limited to, the data itself and the acquisition or usage of the data) involved in the present technical solution should follow the requirements of corresponding laws and regulations, and related specifications.

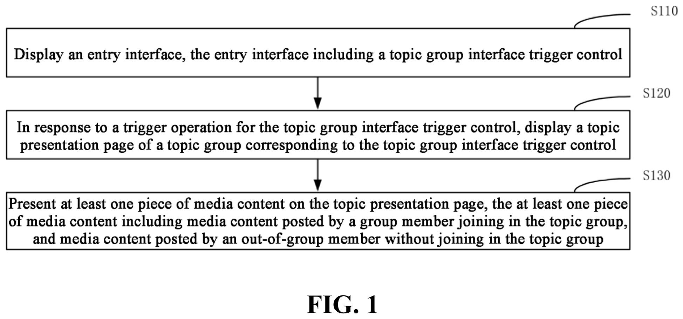

FIG. 1 is a schematic flowchart of an interface display method provided in an embodiment of the present disclosure, the embodiment of the present disclosure is applicable to a case where a topic presentation page is displayed, and the user may browse media content related to a topic corresponding to the topic presentation page in the topic presentation page, the method may be executed by an interface display apparatus, the apparatus may be implemented in the form of software and/or hardware and is optionally implemented by an electronic device, and the electronic device may be a mobile terminal, a PC terminal, a server, or the like.

As shown in FIG. 1, the method includes:
S110: displaying an entry interface, the entry interface including a topic group interface trigger control.

The entry interface may be considered as an interface for triggering the entry to a topic presentation page, and may serve as an entry to the topic presentation page. The topic group interface trigger control may be considered as a control for triggering the topic presentation page of a topic group.

The topic group interface trigger control may be displayed in the entry interface, so that the user can conveniently enter the topic presentation page after triggering the topic group interface trigger control.

In an embodiment, the entry interface may include a plurality of topic group interface trigger controls, each topic group interface trigger control may correspond to one topic group, and after the topic group interface trigger control is triggered, a corresponding topic presentation page may be displayed.

In an embodiment, the entry interface may include one topic group interface trigger control, the topic group interface trigger control may correspond to one or more topic groups. After the topic group interface trigger control is triggered, a corresponding topic presentation page may be displayed. The topic presentation page may include media content included in the topic group corresponding to the topic group interface trigger control. The media content may refer to an important medium for storing and transmitting information. The media content may be audio data, video data, image data, or any combination of the three types of data.

In an embodiment, the entry interface may be a media content playback interface, and the topic group interface trigger control may be displayed on the media content playback interface. The media content playback interface may be an interface for playing a media content stream, and the media content playback interface may include media content corresponding to at least one topic group. After the topic group interface trigger control of the media content playback interface is triggered, a topic corresponding to the displayed topic presentation page may be associated with the topic of media content played on the media content playback interface, for example, the media content played on the media content playback interface is media content under a skiing topic, so after the topic group interface trigger control on the media content playback interface is triggered, a topic presentation page related to the skiing topic may be displayed.

In an embodiment, the entry interface may be a group list interface, and the group list interface may include at least one topic group interface trigger control. The group list interface may be an interface for displaying the topic group interface trigger controls in the form of a list.

The topic group corresponding to the topic group interface trigger control included in the entry interface may include a topic group which the user follows or in which the user joins, and may also include a topic group which the user does not follow or in which the user does not join.

S120: in response to a trigger operation for the topic group interface trigger control, displaying a topic presentation page of a topic group corresponding to the topic group interface trigger control.

The trigger operation may be considered as an operation for triggering the topic group interface trigger control, and a trigger mode is not limited herein. The trigger operation may trigger the topic group interface trigger control by operating a screen, for example, clicking on, double clicking, or long pressing the screen to trigger the topic group interface trigger control.

The topic group may be a group related to a topic, and a member in the topic group may be a member joining in the topic group.

The topic presentation page may be considered as an interface for presenting media content included in the corresponding topic group. Not only may the group member of the topic group post media content to the topic group, but it is also supported to present content of the same topic posted by an out-of-group member in the topic presentation page. Meanwhile, the topic presentation page also supports the browsing of the out-of-group member, and a group member label or a non-group member label may be presented in the topic presentation page.

In an embodiment, media content posted by the group member of the topic group in the topic presentation page may presented with a "group member" label to indicate that the media content is posted by the group member. The content of the same topic of the out-of-group member may be presented without a "group member" label to indicate that the corresponding media content is posted by the out-of-group member.

The media content posted in the topic group may be recommended to a user who is interested in the same topic, and the user is not limited to the group member in the topic group.

After the topic group interface trigger control in the entry interface is triggered, in response to the trigger operation, the topic presentation page of the topic group corresponding to the topic group interface trigger control may be displayed to facilitate the browsing of the user, so that the user can browse media content related to the topic group, and thus facilitating the user to acquire useful information on the Internet.

S130: presenting at least one piece of media content on the topic presentation page, the at least one piece of media content including media content posted by a group member joining in the topic group, and media content posted by an out-of-group member without joining in the topic group.

A plurality of pieces of media content may be presented in the topic presentation page, the presented media content may include the media content posted by the group member of the topic group, and may also include the media content posted by the out-of-group member without joining in the topic group. The user may select to join in the topic group, and media content posted by the user after joining in the topic group may be presented in the topic group, or the media content posted by the user and related to the topic of the topic group may be presented in the topic group.

The group member may be a member in a topic group formed by users joining in the topic group. The out-of-group member may be considered as a member without joining in the topic group, and the similarity between a topic associated with the out-of-group member and a topic corresponding to the topic group may be less than a set threshold value.

Exemplarily, the out-of-group member may be a skiing enthusiast, and then the topic associated with the out-of-group member may be skiing. The topic group may be skiing, and the topic corresponding to the topic group may be skiing. The out-of-group member may be a member who is fond of skiing and does not join in the skiing topic.

The media content posted by the out-of-group member included in the topic group may be all media content posted by the out-of-group member, and may also be media content posted by the out-of-group member and related to the topic of the topic group. Both the acquisition and usage of the media content require the authorization of the user, for example, it is queried whether the group member or the out-of-group member agrees to synchronize the media content to the topic presentation page.

In the technical solutions of the embodiments of the present disclosure, by displaying the entry interface, the entry interface including the topic group interface trigger control; in response to the trigger operation for the topic group interface trigger control, displaying the topic presentation page of the topic group corresponding to the topic group interface trigger control; and presenting the at least one piece of media content on the topic presentation page, the at least one piece of media content including the media content posted by the group member joining in the topic group, and the media content posted by the out-of-group member without joining in the topic group, the problem of it being relatively difficult for the user to acquire useful information on the Internet is solved; and by providing the entry interface for the user, after the user triggers the topic group interface trigger control, the topic presentation page is displayed for the user, the media content posted by the group member joining in the topic group and the media content posted by the out-of-group member without joining in the topic group may be displayed in the topic presentation page, and the user may browse the media content related to the topic of the topic group in the topic presentation page, thereby facilitating the user to acquire the useful information on the Internet.

Based on the above embodiments, variant embodiments of the above embodiments are proposed, and it should be noted here that in order to simplify the description, only differences from the above embodiments are described in the variant embodiments.

In an embodiment, the topic presentation page further includes identification information, and the identification information identifies an association relationship between a poster of corresponding media content and the topic group.

A plurality of pieces of media content may be displayed in the topic presentation page, and corresponding identification information may be displayed on each piece of media content, or corresponding identification information may be displayed on a part of media content. The identification information may indicate the association relationship between the poster of the corresponding media content and the topic group corresponding to the topic presentation page.

The association relationship may be considered as a relationship of the association between the poster and the topic group. The association relationship may be a relationship for indicating whether the poster is a group member of the topic group, and may also be a relationship for indicating the liveness of the poster in the topic group, where the poster may be considered as a user posting the media content.

The identification information may be displayed on a part of media content in the topic presentation page, the identification information is displayed on which media content is not limited herein, and may be determined based on actual situations, for example, the identification information may identify whether the poster is a member of the topic group, the topic presentation page may display the identification information on the media content posted by the out-of-group member without joining in the topic group, to identify that the media information is media information posted by the out-of-group member.

In an embodiment, the topic presentation page includes an interaction control of media content.

The interaction control may be considered as a control for the interaction of a user browsing the media content, for example, a control for performing like, comment, forwarding or collection on the media content.

In the present embodiment, each piece of media content is provided with a corresponding interaction control for the interaction of a browser. The topic presentation page may also be referred to as a group detail page, and interaction data of the media content included in the topic presentation page may be received in the topic presentation page by the interaction control. The interaction data may be data generated by operating the interaction control. The interaction data may be displayed in an interface for displaying an interaction message, and it may be identified during the display that the interaction message is from the topic group.

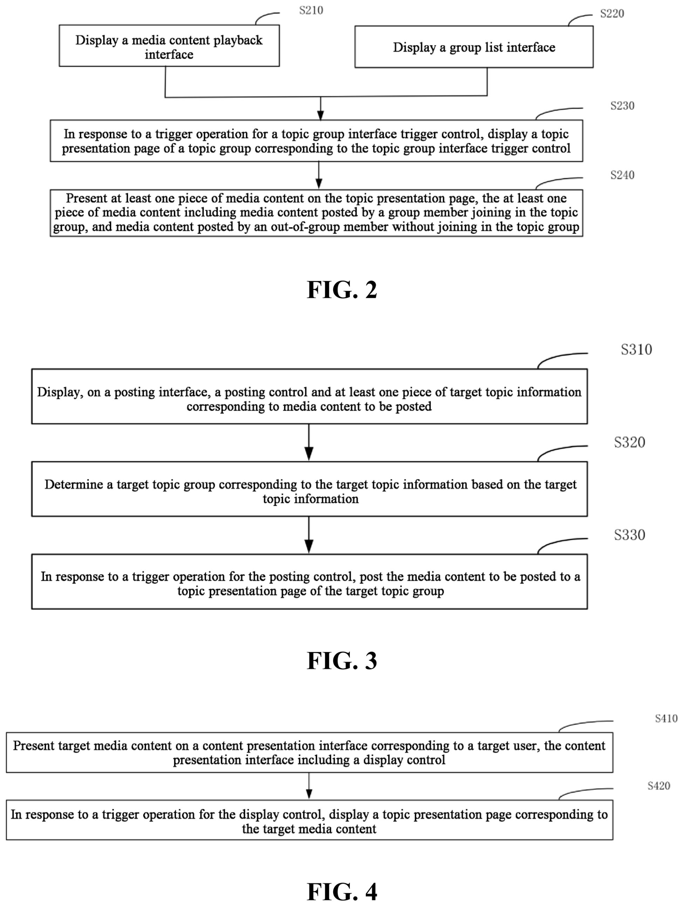

FIG. 2 is a schematic flowchart of another interface display method provided in an embodiment of the present disclosure, the present embodiment refines the operation of displaying the entry interface, and as shown in FIG. 2, the method includes:
S210: displaying a media content playback interface, and executing S230.

The media content playback interface includes at least one topic group interface trigger control.

There may be a plurality of controls under the media content playback interface, each control corresponds to a respective interface, and after the topic group interface trigger control is triggered, the topic presentation page may be displayed. The display position of the topic group interface trigger control on the media content playback interface is not limited, the topic group interface trigger control may be displayed in a presentation region of the media content, and may also be displayed in a skylight of the media content playback interface, and the skylight may be a set region above the media content playback interface.

The topic group interface trigger control in the present step may be located in an expanded module on the media content playback interface, and is dedicated to presentation of content associated with a topic group. The expanded module may be a newly added module, for example, the topic group interface trigger control is newly displayed on a home page, and after the topic group interface trigger control is triggered, the entry interface may be displayed.

S220: displaying a group list interface, and executing S230.

The group list interface includes at least one topic group interface trigger control. The group list interface may be an interface for displaying the topic group interface trigger control corresponding to the topic group, and the group list interface may display a plurality of topic group interface trigger controls.

S230: in response to a trigger operation for a topic group interface trigger control, displaying a topic presentation page of a topic group corresponding to the topic group interface trigger control.

S240: presenting at least one piece of media content on the topic presentation page, the at least one piece of media content including media content posted by a group member joining in the topic group, and media content posted by an out-of-group member without joining in the topic group.

The embodiment of the present disclosure refines the entry interface, and the present embodiment may trigger the entry to the topic presentation page in a plurality of interaction modes, so that the interaction modes of the user are enriched, the efficiency of the user acquiring useful information is higher, and the usage efficiency of the user is improved.

FIG. 3 is a schematic flowchart of a media content posting method provided in an embodiment of the present disclosure, the present embodiment is applicable to a case where media content is posted, the method may be executed by a media content posting apparatus, and the apparatus may be implemented in the form of software and/or hardware and is optionally implemented by an electronic device, and the electronic device may be a mobile terminal, a PC terminal, a server, or the like.

As shown in FIG. 3, the method includes:
S310: displaying, on a posting interface, a posting control and at least one piece of target topic information corresponding to media content to be posted.

The posting interface may be considered as an interface for posting media content. The posting control may be considered as a control for triggering the posting of media content. The media content to be posted may be considered as media content to be posted, and after being posted, the media content may be used based on a permission set when a poster posts same, for example, for the browsing of other users. The target topic information may be topic information corresponding to the media content to be posted. The target topic information may be information of a topic to which the media content to be posted belongs. The target topic information may be information automatically determined for the poster based on media information to be posted. In the present embodiment, the poster may be a user posting information to be posted. The topic associated with the poster may be considered to be the same as or similar to a topic corresponding to a topic group.

In the present step, the posting control may be displayed on the posting interface to enable the poster to post the media content to be posted, and the target topic information of the media content to be posted is displayed on the posting interface to enable the poster to know the target topic information corresponding to the media content to be posted and a target topic group to which the media content to be posted is about to be posted. The target topic group may be considered as a topic group corresponding to the target topic information. The media information to be posted is about to be posted to the target topic group.

S320: determining a target topic group corresponding to the target topic information based on the target topic information.

After the target topic information is determined, the target topic group corresponding to the target topic information may be determined based on a correspondence between topic information and topic groups. For example, the correspondence between topic information and topic groups may be queried based on the target topic information to search for the target topic group corresponding to the target topic information.

S330: in response to a trigger operation for the posting control, posting the media content to be posted to a topic presentation page of the target topic group.

The specific content of the trigger operation is not limited, and reference may be made to the description of the trigger operation in the above embodiments.

After the posting control is triggered, the media content to be posted may be posted to the topic presentation page corresponding to the target topic group in the present step. The target topic group may correspond to its topic presentation page for presenting the media content of the target topic group. The posting of the media content to be posted to the target topic group requires authorization. After the authorization of the user, the media content to be posted may be posted to the target topic group.

In the present embodiment, by determining the target topic information, and posting the media content to be posted to the topic presentation page of the target topic group corresponding to the target topic information, the media content to be posted is posted to the topic group to be presented by a group detail page, wherein the group detail page may be considered as the topic presentation page.

In an embodiment, the posting interface is displayed, and the media content to be posted and the corresponding target topic information may be presented in the posting interface, for example, a skiing label is presented in a topic style. After it is determined that the target topic information is skiing, the target topic group corresponding to the skiing, for example, a skiing group, may be determined. After the user triggers the posting control, the media content to be posted may be posted and displayed on the topic presentation page of the target topic group, for example, a skiing topic presentation page. The remaining presentation positions of the posted media information to be posted are not limited herein, for example, the media information to be posted may also be presented on a content presentation interface. The content presentation interface may be an interface for presenting media content, which may be configured to present a media content stream including a plurality of pieces of media content, where the plurality of pieces of media content may include media content of different topics. The topic presentation page may be considered as dividing the media content in the manner of topic group and displaying the media content belonging to the same topic or related topics in the topic presentation page.

The embodiments of the present disclosure disclose a media content posting method. Based on the media content posting method, after being posted, the media content to be posted may be posted to the target topic group corresponding to the media content to be posted, so that the posted media content to be posted is more easily browsed by a browser wanting to browse the media content to be posted, the efficiency of posting the media content to be posted is improved, and the page view of the media content to be posted is improved.

For details that are not detailed in the present embodiment, reference may be made to the above embodiments, and thus no repeated description will be given herein.

In an embodiment, the topic presentation page further includes identification information, and the identification information identifies an association relationship between a poster of the posted media content to be posted and the target topic group. For example, the posted media content to be posted and the corresponding identification information are displayed on the topic presentation page, and the identification information identifies whether the poster posting the media content to be posted is a group member of the target topic group.

In an embodiment, the topic presentation page includes an interaction control of the posted media content to be posted for enabling the browser to perform interaction by the interaction control.

FIG. 4 is a schematic flowchart of a media content presentation method provided in an embodiment of the present disclosure, the method is applicable to a case where media content is presented, the method is executed by a media content presentation apparatus, the apparatus may be implemented in the form of software and/or hardware and is optionally implemented by an electronic device, and the electronic device may be a mobile terminal, a PC terminal, a server, or the like. The electronic devices respectively corresponding to the interface display method, the media content posting method and the media content presentation method may be the same electronic device, and may also be different electronic devices.

As shown in FIG. 4, the media content presentation method includes:
S410: presenting target media content on a content presentation interface corresponding to a target user, the content presentation interface including a display control.

The target user may be a browser of the content presentation interface, and the content presentation interface may be an interface for presenting media content. The content presentation interface is different from a topic presentation page, and the topic presentation page presents media content associated with a topic group corresponding to the topic presentation page by taking the topic group as a division standard. The content presentation interface may have other division manners other than the topic group division manner, for example, the content presentation interface may be an interface for recommending media content, and as another example, the content presentation interface may be an interface for presenting media content of a user performing follow.

The target media content may be media content presented to the target user in the content presentation interface. The target media content may be media content included in a certain topic group. The target media content may include media content posted by a group member joining in the topic group, and may also include media content posted by an out-of-group member without joining in the topic group. The media content posted by the out-of-group member may be media content associated with the topic group.

The display control may be considered as a control for triggering the display of the topic presentation page corresponding to the target media content.

In the content presentation interface, the display control may also be presented in addition to presenting the target media content, so that the topic presentation page corresponding to the target media content can be conveniently displayed by the target user triggering the display control, and then the user browses the remaining media content in the topic presentation page.

S420: in response to a trigger operation for the display control, displaying a topic presentation page corresponding to the target media content.

The topic presentation page corresponding to the target media content may be considered as a topic presentation interface to which the target media content belongs. The target media content may be browsed in the corresponding topic presentation page.

After the display control is triggered, the topic presentation page of the target media content may be displayed to enable the target user to browse the media content in the topic presentation page.

The topic presentation page is a presentation interface of a topic group to which the target media content presented on the content presentation interface belongs, and the target user includes a group member in the belonging topic group and an out-of-group member outside the belonging topic group.

The target media content may be browsed in the content presentation interface by the group member and the out-of-group member of the belonging topic group, so that more users can browse the target media content, and the visibility of the target media content is not limited to the topic group.

The media content in the topic group is not limited to only including media content posted by the group member, and may further include media content posted by the out-of-group member, thereby further implementing the semi-openness of the topic group.

In the embodiments of the present disclosure, the target media content in the topic group may be presented in the content presentation interface, thereby enriching the display position of the target media content, and after the display control is triggered, it is convenient to enter the topic presentation page corresponding to the topic group.

In an embodiment, the target media content includes media content posted by a group member joining in the topic group on the topic presentation page of the topic group, the content presentation interface is an interface for presenting a media content stream to the target user, and the media content stream presented on the content presentation interface includes target media content included in at least one topic group and media content beyond the topic group.

The target media content may be media content posted by the group member on the topic presentation page, and the target media content may be displayed on the content presentation interface.

The media content included in the content presentation interface may include target media content included in a plurality of topic groups, and the plurality of topic groups may be topic groups of interest to the target user, and may also be randomly determined topic groups. The media content beyond the topic group may be media content that is not presented on the topic presentation page of the topic group.

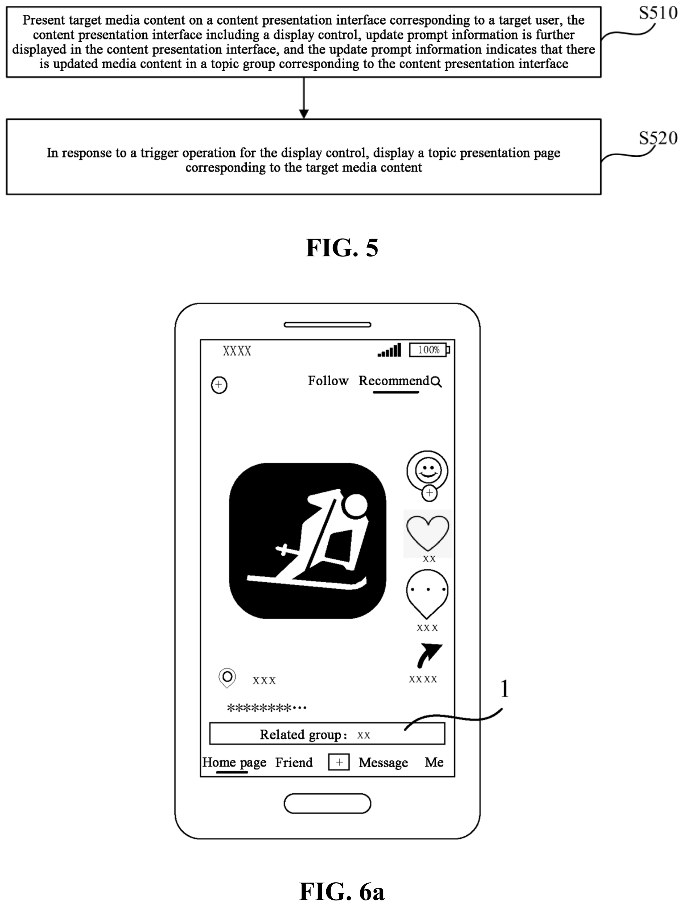

FIG. 5 is a schematic flowchart of another media content presentation method provided in an embodiment of the present disclosure. In the present embodiment, the content presentation interface further includes update prompt information. As shown in FIG. 5, the media content presentation method includes:
S510: presenting target media content on a content presentation interface corresponding to a target user, the content presentation interface including a display control, update prompt information is further displayed in the content presentation interface, and the update prompt information indicates that there is updated media content in a topic group corresponding to the content presentation interface.

The update prompt information may indicate that there is updated media content in the corresponding topic group, and the update prompt information may be presented only in the content presentation interface corresponding to a group member of the topic group.

S520: in response to a trigger operation for the display control, displaying a topic presentation page corresponding to the target media content.

In the embodiment of the present disclosure, the content presentation interface further includes the update prompt information to prompt the target user that the media content in the topic presentation page of the topic group is updated, so that the target user can browse the updated content in time.

An exemplary description of the present disclosure will be given below, the interface display method, the media content posting method and the media content presentation method provided in the present disclosure may be based on a topic group, and the topic group may be determined based on a topic of interest.

For example, if the same population like authors A and B, the two authors may be associated together, and authors of more relevant topics are associated. By means of machining model clustering and combining the Leiden algo algorithm, a set is formed in the form of clusters, each cluster includes a plurality of associated authors associated with a main body. When an author included in the cluster posts a work of a related topic, the associated topic group is matched according to content correlation, and the user is guided to synchronize the work to the topic group before and after the contribution of the user. It can be understood that the content is processed in the case of authorization of a corresponding user.

FIG. 6a is a schematic diagram of a content presentation interface provided in an embodiment of the present disclosure. Referring to FIG. 6a, group content, that is, target media content, may be recommended to a target user in the content presentation interface. A display control "Related group: xx" 1 may also be displayed on a lower part of the content presentation interface, and after the display control "Related group: xx" 1 is triggered, the display of a topic presentation page of a corresponding topic group may be triggered. The display control "Related group: xx" 1 may also have an indication function to indicate a topic group to which the target media content belongs.

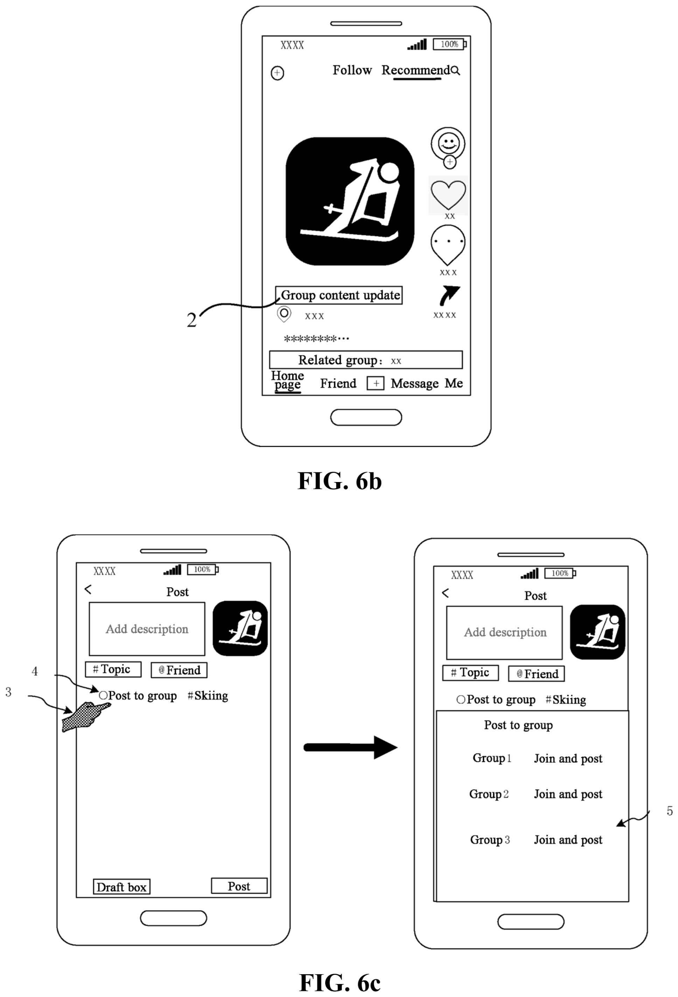

FIG. 6b is a schematic diagram of another content presentation interface provided in an embodiment of the present disclosure. Referring to FIG. 6b, update prompt information "Group content update" 2 may be displayed in the content presentation interface to indicate the target user that there is updated media content in the topic group. The content presentation interface implements out-of-group display of media content in the topic group.

The display modes and display positions of the update prompt information and the display control are not limited herein, and different transparency may be set for the update prompt information and the display control to avoid shielding.

FIG. 6c is a schematic diagram of a media content posting process provided in an embodiment of the present disclosure. Referring to FIG. 6c, when a poster posts media content to be posted, according to the correlation between the media content to be posted and a topic group, the poster may be instructed to join in the topic group before the poster posting the media content to be posted and to post the media content to be posted to the topic group. After a poster 3 clicks on a group selection control "post to group" 4, a recommended group list page 5 may be displayed for the selection of the poster 3. The group list page 5 includes a recommended group, and may further include description information of the group, for example, a brief introduction of the group and the number of people in the group; and the group list page 5 may further include a join and post control for enabling the poster 3 to join in the group and to post the media content to be posted to a corresponding group. Here, the presentation mode of the control is not limited, one control may be included, after the control is triggered, the poster joins in the group and posts the media content to be posted to the group. Three controls may also be included, one control implements joining and posting, one control only implements a group joining function, and one control only implements the function of posting the media content to be posted to the group. Two controls may also be included, one control implements the group joining function, and one control implements the function of posting the media content to be posted to the group.

In the present disclosure, after the poster posts the media content to be posted, the poster may be instructed to synchronize the posted media content to the corresponding topic group.

The correlation between the media content to be posted and the topic group may be determined in the following manner:
a topic identifier related to the media content to be posted is acquired, the topic identifier related to the media content to be posted may be an identifier corresponding to a topic of which the correlation score of the media content to be posted with the topic is greater than a set score, and may also be an identifier corresponding to a topic input by the poster.

A topic identifier strongly related to a topic of interest is matched by the acquired topic identifier to find the corresponding topic group, specifically:
the topic group to be matched with the acquired topic identifier may be a created topic group. When the media content to be posted meets the following conditions, it is considered that the media content to be posted may be matched with the topic of interest:
the media content to be posted has at least y topic identifiers overlapping with top n% topic identifiers in the topic of interest, where the value of y may be 2, and the value of n may be 20.

The topic identifier may be a middleware, which is configured to match the media content to be posted with the topic of interest.

After the topic of interest is matched, all groups of the topic of interest are taken out, a topic group to which the user belongs is preferentially selected, and groups with top rankings may also be determined according to the number of group members for recommendation, for example, top five groups are selected as topic groups associated with the media content to be posted and are recommended to the poster.

Exemplarily, based on the topic recommended to the poster on the posting interface of the media content to be posted, it is determined that the topic identifier of the media content to be posted is skiing, it is determined that the corresponding topic is a skiing topic, and a group created based on the skiing topic is a skiing enthusiast group, and then skiing enthusiasts are recommended to the poster as the recommended topic groups, to post the media content to be posted to a skiing enthusiast group.

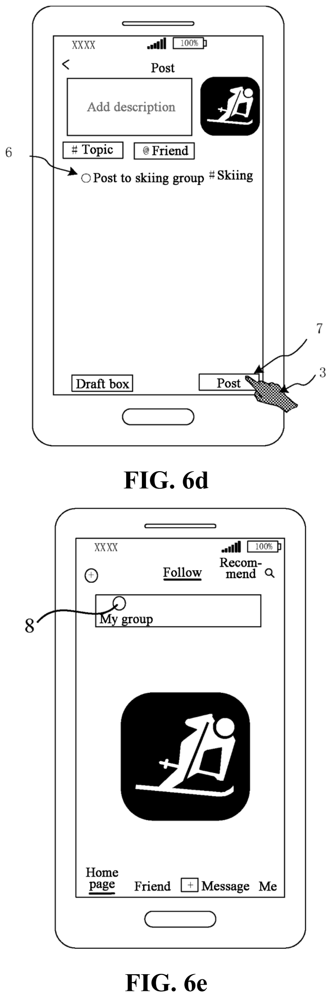

FIG. 6d is a schematic diagram of posting media content provided in an embodiment of the present disclosure. Referring to FIG. 6d, a posting interface displays a target topic group "post to skiing group" 6 and a posting control 7, and after the poster 3 clicks on the posting control 7, the media content to be posted may be posted to the skiing group. After the target topic group "post to skiing group" 6 is clicked on, the display of a recommended group list page may be triggered for the poster 3 to select a group.

FIG. 6e is a schematic diagram of a preset channel interface provided in an embodiment of the present disclosure. Referring to FIG. 6e, a group control 8 may be displayed in a skylight of the preset channel interface. After the group control 8 clicked on, it is possible to enter a topic presentation page. The remaining areas of the preset channel interface may display media content. In some embodiments, the group control 8 may also belong to the same level as "Follow" and "Recommend" controls to serve as a control corresponding to a newly added module; or after the group control 8 clicked on, it is also possible to enter a group list interface.

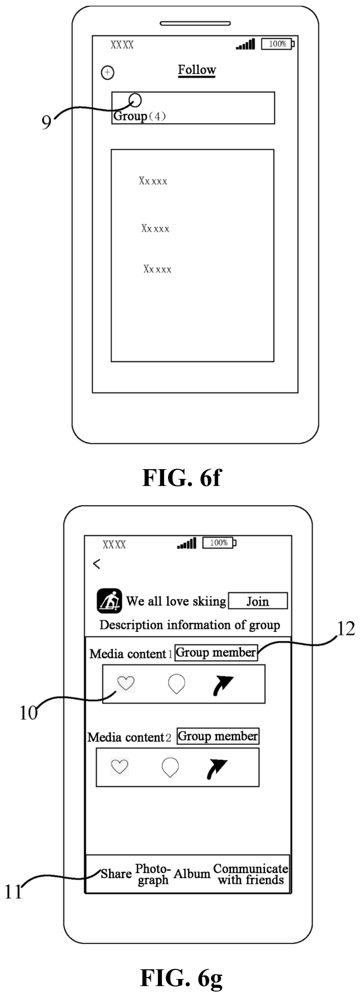

FIG. 6f is a schematic diagram of a group list interface provided in an embodiment of the present disclosure. Referring to 6f, the group list interface may include one or more topic group interface trigger controls 9, and the group list interface may display users followed by the user, media content, and the like.

FIG. 6g is a schematic interface diagram of a topic presentation page provided in an embodiment of the present disclosure. Referring to FIG. 6g, the topic presentation page includes description information of a group for displaying the brief introduction of the group and the number of people in the group. The topic presentation page may further include a join control for joining in the group. The topic presentation page may include a plurality of pieces of media content and an interaction control 10 corresponding to each piece of media content, and may further include a group control 11 for the user to perform interaction in the group. A label 12 may also be displayed at the media content to indicate whether the poster of the media content is a group member. An interaction person, that is, a label of a user posting a comment, may also be displayed at interaction content, for example, a comment location, unfolded on an unfolding panel of the interaction control 10 of the media content, to represent whether the user posting the comment is a group member.

The topic presentation page may include different partitions, which may include a hot partition, a latest partition and a real-time partition. The topic presentation page may display one partition at a time, and different partitions display corresponding partitions after corresponding labels are triggered.

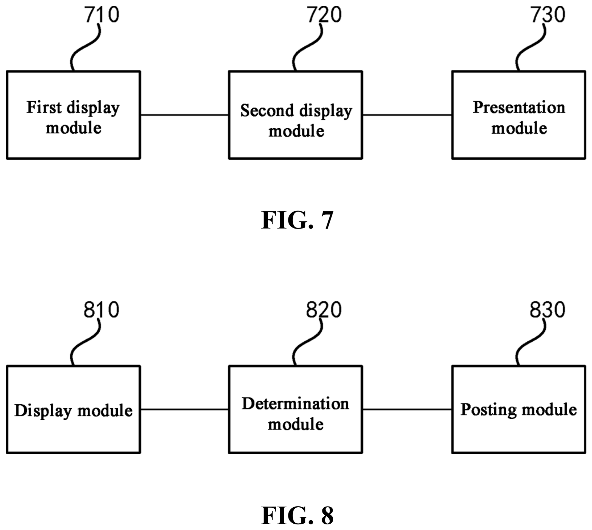

FIG. 7 is a schematic structural diagram of an interface display apparatus provided in an embodiment of the present disclosure, the apparatus may be integrated into an electronic device, and as shown in FIG. 7, the apparatus includes:
a first display module 710, configured to display an entry interface, the entry interface including a topic group interface trigger control;
a second display module 720, configured to: in response to a trigger operation for the topic group interface trigger control, display a topic presentation page of a topic group corresponding to the topic group interface trigger control; and
a presentation module 730, configured to present at least one piece of media content on the topic presentation page, the at least one piece of media content including media content posted by a group member joining in the topic group, and media content posted by an out-of-group member without joining in the topic group.

In the technical solutions provided in the embodiments of the present disclosure, the problem of it being relatively difficult for the user to acquire useful information on the Internet is solved; and by providing the entry interface for the user, after the user triggers the topic group interface trigger control, the topic presentation page is presented for the user, the media content posted by the group member joining in the topic group and the media content posted by the out-of-group member without joining in the topic group may be displayed in the topic presentation page, and the user may browse the media content related to the topic of the topic group in the topic presentation page, thereby facilitating the user to acquire the useful information on the Internet.

In an embodiment, the topic presentation page further includes identification information, and the identification information identifies an association relationship between a poster of corresponding media content and the topic group.

In an embodiment, the first display module 710 is specifically configured to:
display a media content playback interface, the media content playback interface including at least one topic group interface trigger control; or
display a group list interface, the group list interface including at least one topic group interface trigger control.

In an embodiment, the topic presentation page includes an interaction control of media content.

The interface display apparatus provided in the embodiments of the present disclosure may execute the interface display method provided in any embodiment of the present disclosure, and has corresponding functional modules and beneficial effects for executing the method.

It should be noted that the units and modules included in the above apparatus are only divided according to functional logic, but are not limited to the above division, as long as corresponding functions may be implemented; and in addition, the specific names of the functional units are merely for ease of distinguishing from each other, and are not intended to limit the protection scope of the embodiments of the present disclosure.

FIG. 8 is a schematic structural diagram of a media content posting apparatus provided in an embodiment of the present disclosure, the apparatus may be integrated into an electronic device, and as shown in FIG. 8, the apparatus includes:
a display module 810, configured to display, on a posting interface, a posting control and at least one piece of target topic information corresponding to media content to be posted;
a determination module 820, configured to determine a target topic group corresponding to the target topic information based on the target topic information; and
a posting module 830, configured to: in response to a trigger operation for the posting control, post the media content to be posted to a topic presentation page of the target topic group.

In the technical solutions provided in the embodiments of the present disclosure, based on the media content posting apparatus, after being posted, the media content to be posted may be posted to the target topic group corresponding to the media content to be posted, so that the posted media content to be posted is more easily browsed by a browser wanting to browse the media content to be posted, the efficiency of posting the media content to be posted is improved, and the page view of the media content to be posted is improved.

The media content posting apparatus provided in the embodiments of the present disclosure may execute the media content posting method provided in any embodiment of the present disclosure, and has corresponding functional modules and beneficial effects for executing the method.

It should be noted that the units and modules included in the above apparatus are only divided according to functional logic, but are not limited to the above division, as long as corresponding functions may be implemented; and in addition, the specific names of the functional units are merely for ease of distinguishing from each other, and are not intended to limit the protection scope of the embodiments of the present disclosure.

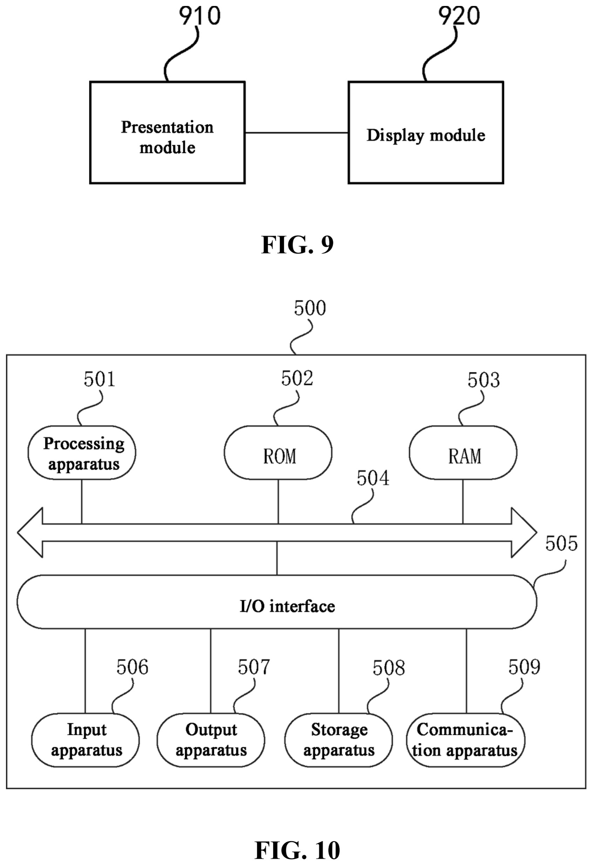

FIG. 9 is a schematic structural diagram of a media content presentation apparatus provided in an embodiment of the present disclosure, the apparatus may be integrated into an electronic device, and the apparatus includes:
a presentation module 910, configured to present target media content on a content presentation interface corresponding to a target user, the content presentation interface including a display control; and
a display module 920, configured to: in response to a trigger operation for the display control, display a topic presentation page corresponding to the target media content, the topic presentation page being a presentation interface of a topic group to which the target media content presented on the content presentation interface belongs, and the target user including a group member in the belonging topic group and an out-of-group member outside the belonging topic group.

In the technical solutions provided in the embodiments of the present disclosure, the media content presentation apparatus may present the target media content in the topic group in the content presentation interface, thereby enriching the display position of the target media content, and after the display control is triggered, it is convenient to enter the topic presentation page corresponding to the topic group.

In an embodiment, the target media content includes media content posted by a group member joining in the topic group on the topic presentation page of the topic group, the content presentation interface is an interface for presenting a media content stream to the target user, and the media content stream presented on the content presentation interface includes target media content included in at least one topic group and media content beyond the topic group.

In an embodiment, update prompt information is further displayed in the content presentation interface, and the update prompt information indicates that there is updated media content in a topic group corresponding to the content presentation interface.

The media content presentation apparatus provided in the embodiments of the present disclosure may execute the media content presentation method provided in any embodiment of the present disclosure, and has corresponding functional modules and beneficial effects for executing the method.

It should be noted that the units and modules included in the above apparatus are only divided according to functional logic, but are not limited to the above division, as long as corresponding functions may be implemented; and in addition, the specific names of the functional units are merely for ease of distinguishing from each other, and are not intended to limit the protection scope of the embodiments of the present disclosure.

FIG. 10 is a schematic structural diagram of an electronic device provided in an embodiment of the present disclosure. Specific reference is made to FIG. 10, it illustrates a structural schematic diagram of an electronic device 500 (e.g., a terminal device or a server in FIG. 10) suitable for implementing an embodiment of the present disclosure.

The electronic device 500 includes: one or more processing apparatuses; and
a storage apparatus, configured to store one or more programs, wherein
when the one or more programs are executed by the one or more processing apparatuses, the one or more processing apparatuses are caused to implement the method provided in the embodiments of the present disclosure.

The terminal device in the embodiments of the present disclosure may include, but is not limited to, mobile terminals such as mobile phones, notebook computers, digital broadcast receivers, PDAs (Personal Digital Assistants), PADs (Portable Android Devices), PMPs (Portable Multimedia Players), in-vehicle terminals (e.g., in-vehicle navigation terminals), and the like, and fixed terminals such as digital TVs, desktop computers, etc. The electronic device shown in FIG. 10 is merely an example and should not bring any limitation to the functions and usage ranges of the embodiments of the present disclosure.

As shown in FIG. 10, the electronic device 500 may include a processing apparatus (e.g., a central processing unit, a graphics processing unit, or the like) 501, which may execute various suitable actions and processes in accordance with a program stored in a read-only memory (ROM) 502 or a program loaded from a storage apparatus 508 into a random access memory (RAM) 503. In the RAM 503, various programs and data needed by the operations of the electronic device 500 are also stored. The processing apparatus 501, the ROM 502 and the RAM 503 are connected to each other via a bus 504. An editing/output (I/O) interface 505 is also connected to the bus 504.

In general, the following apparatuses may be connected to the I/O interface 505: an input apparatus 506, including, for example, a touch screen, a touch pad, a keyboard, a mouse, a camera, a microphone, an accelerometer, a gyroscope, and the like; an output apparatus 507, including, for example, a liquid crystal display (LCD), a speaker, a vibrator, and the like; a storage apparatus 508, including, for example, a magnetic tape, a hard disk, and the like; and a communication apparatus 509. The communication apparatus 509 may allow the electronic device 500 to communicate in a wireless or wired manner with other devices to exchange data. Although FIG. 10 illustrates the electronic device 500 having various apparatuses, it should be understood that not all illustrated apparatuses are required to be implemented or provided. More or fewer apparatuses may alternatively be implemented or provided.

In particular, according to the embodiments of the present disclosure, the processes described above with reference to the flowcharts may be implemented as computer software programs. For example, the embodiments of the present disclosure include a computer program product, which includes a computer program carried on a non-transient computer-readable medium, and the computer program includes program codes for executing the method illustrated in the flowcharts. In such embodiments, the computer program may be downloaded and installed from a network via the communication apparatus 509, or installed from the storage apparatus 508, or installed from the ROM 502. When the computer program is executed by the processing apparatus 501, the above functions defined in the method in the embodiments of the present disclosure are executed.

The names of messages or information exchanged between the plurality of devices in the embodiments of the present disclosure are for illustrative purposes only and are not intended to limit the scope of the messages or information.

The electronic device provided in the embodiment of the present disclosure belong to the same inventive concept as the method provided in the above embodiments, for technical details that not described in detail in the present embodiment, reference may be made to the above embodiments, and the present embodiment has the same effects as the above embodiments.

An embodiment of the present disclosure provides a computer storage medium, storing a computer program thereon, wherein the program, when executed by a processor, implements the method provided in the above embodiments.

It should be noted that, the computer-readable medium described above in the present disclosure may be either a computer-readable signal medium or a computer-readable storage medium, or any combination of the two.

The computer-readable storage medium may be a storage medium of computer-executable instructions, and the computer-executable instructions, when executed by a computer program, are configured to execute the method provided in the present disclosure.

The computer-readable storage medium may be, for example, but are not limited to, an electrical, magnetic, optical, electromagnetic, infrared, or semiconductor system, apparatus or device, or a combination of any of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or a flash memory), an optical fiber, a compact disc read-only memory (CD-ROM), an optical storage device, a magnetic storage device, or any suitable combination thereof. In the present disclosure, the computer-readable storage medium may be any tangible medium that includes or stores a program, and the program may be used by or in combination with an instruction execution system, apparatus or device. In the present disclosure, the computer-readable signal medium may include a data signal that is propagated in a baseband or used as part of a carrier, wherein the data signal carries computer-readable program codes. Such propagated data signal may take many forms, including, but not limited to, electromagnetic signals, optical signals, or any suitable combination thereof. The computer-readable signal medium may also be any computer-readable medium other than the computer-readable storage medium, and the computer-readable signal medium may send, propagate or transmit the program for use by or in combination with the instruction execution system, apparatus or device. Program codes included on the computer-readable medium may be transmitted with any suitable medium, including, but not limited to: an electrical wire, an optical cable, RF (Radio Frequency), and the like, or any suitable combination thereof.

In some embodiments, a client and a server may perform communication by using any currently known or future-developed network protocol, such as an HTTP (HyperText Transfer Protocol), and may be interconnected with any form or medium of digital data communication (e.g., a communication network). Examples of the communication network include a local area network ("LAN"), a wide area network ("WAN"), an international network (e.g., the Internet), and a peer-to-peer network (e.g., an ad hoc peer-to-peer network), as well as any currently known or future-developed network.

The computer-readable medium may be included in the above electronic device; and it may also be present separately and is not assembled into the electronic device.

The computer-readable medium carries one or more programs, and when the one or more programs are executed by the electronic device, the electronic device is caused to: display an entry interface, the entry interface including a topic group interface trigger control; in response to a trigger operation for the topic group interface trigger control, display a topic presentation page of a topic group corresponding to the topic group interface trigger control; and present at least one piece of media content on the topic presentation page, the at least one piece of media content including media content posted by a group member joining in the topic group, and media content posted by an out-of-group member without joining in the topic group.

Or, the computer-readable medium carries one or more programs, and when the one or more programs are executed by the electronic device, the electronic device is caused to: display, on a posting interface, a posting control and at least one piece of target topic information corresponding to media content to be posted; determine a target topic group corresponding to the target topic information based on the target topic information; and in response to a trigger operation for the posting control, post the media content to be posted to a topic presentation page of the target topic group.

Or, the computer-readable medium carries one or more programs, and when the one or more programs are executed by the electronic device, the electronic device is caused to: present target media content on a content presentation interface corresponding to a target user, the content presentation interface including a display control; and in response to a trigger operation for the display control, displaying a topic presentation page corresponding to the target media content, the topic presentation page being a presentation interface of a topic group to which the target media content presented on the content presentation interface belongs, and the target user including a group member in the belonging topic group and an out-of-group member outside the belonging topic group.

Computer program codes for executing the operations of the present disclosure may be written in one or more programming languages or combinations thereof. The programming languages include, but are not limited to, object node-oriented programming languages, such as Java, Smalltalk, C++, and conventional procedural programming languages, such as the "C" language or similar programming languages. The program codes may be executed entirely on a user computer, executed partly on the user computer, executed as a standalone software package, executed partly on the user computer and partly on a remote computer, or executed entirely on the remote computer or a server. In the case involving the remote computer, the remote computer may be connected to the user computer through any type of network, including a local area network (LAN) or a wide area network (WAN), or it may be connected to an external computer (e.g., through the Internet using an Internet service provider).

The flowcharts and block diagrams in the drawings illustrate system architectures, functions and operations of possible implementations of systems, methods and computer program products according to various embodiments of the present disclosure. In this regard, each block in the flowcharts or block diagrams may represent a part of a module, a program segment, or a code, which includes one or more executable instructions for implementing specified logical functions. It should also be noted that, in some alternative implementations, the functions annotated in the blocks may occur out of the sequence annotated in the drawings. For example, two blocks shown in succession may, in fact, be executed substantially in parallel, or the blocks may sometimes be executed in a reverse sequence, depending upon the functions involved. It should also be noted that each block in the block diagrams and/or flowcharts, and combinations of the blocks in the block diagrams and/or flowcharts may be implemented by dedicated hardware-based systems for executing specified functions or operations, or combinations of dedicated hardware and computer instructions.

The modules or units involved in the described embodiments of the present disclosure may be implemented in a software manner and may also be implemented in a hardware manner, wherein the names of the modules or units do not constitute limitations of the units themselves in a certain case, for example, a first display module may also be described as "an entry interface display module".

The functions described herein above may be executed, at least in part, by one or more hardware logical components. For example, without limitation, example types of the hardware logical components that may be used include: a field programmable gate array (FPGA), an application-specific integrated circuit (ASIC), an application specific standard product (ASSP), a system on chip (SOC), a complex programmable logic device (CPLD), and so on.

In the context of the present disclosure, a machine-readable medium may be a tangible medium, which may include or store a program for use by or in combination with the instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above content. More specific examples of the machine-readable storage medium include an electrical connection based on one or more wires, a portable computer disk, a hard disk, a random access memory (RAM), a read-only memory (ROM), an erasable programmable read-only memory (EPROM or a flash memory), an optical fiber, a compact disc-read-only memory (CD-ROM), an optical storage device, a magnetic storage device, or any suitable combination of the above content.

According to one or more embodiments of the present disclosure, [Example 1] provides an interface display method, including:
displaying an entry interface, the entry interface including a topic group interface trigger control;
in response to a trigger operation for the topic group interface trigger control, displaying a topic presentation page of a topic group corresponding to the topic group interface trigger control; and
presenting at least one piece of media content on the topic presentation page, the at least one piece of media content including media content posted by a group member joining in the topic group, and media content posted by an out-of-group member without joining in the topic group.

According to one or more embodiments of the present disclosure, [Example 2] provides the method of Example 1, the topic presentation page further includes identification information, and the identification information identifies an association relationship between a poster of corresponding media content and the topic group.

According to one or more embodiments of the present disclosure, [Example 3] provides the method of Example 1, displaying the entry interface includes:
displaying a media content playback interface, the media content playback interface including at least one topic group interface trigger control; or
displaying a group list interface, the group list interface including at least one topic group interface trigger control.

According to one or more embodiments of the present disclosure, [Example 4] provides the method of Example 1, the topic presentation page includes an interaction control of media content.

According to one or more embodiments of the present disclosure, [Example 5] provides a media content posting method, including:
displaying, on a posting interface, a posting control and at least one piece of target topic information corresponding to media content to be posted;
determining a target topic group corresponding to the target topic information based on the target topic information; and
in response to a trigger operation for the posting control, posting the media content to be posted to a topic presentation page of the target topic group.

According to one or more embodiments of the present disclosure, [Example 6] provides a media content presentation method, including:
presenting target media content on a content presentation interface corresponding to a target user, the content presentation interface including a display control; and
in response to a trigger operation for the display control, displaying a topic presentation page corresponding to the target media content, the topic presentation page being a presentation interface of a topic group to which the target media content presented on the content presentation interface belongs, and the target user including a group member in the belonging topic group and an out-of-group member outside the belonging topic group.

According to one or more embodiments of the present disclosure, [Example 7] provides the method of Example 6, the target media content includes media content posted by a group member joining in the topic group on the topic presentation page of the topic group, the content presentation interface is an interface for presenting a media content stream to the target user, and the media content stream presented on the content presentation interface includes target media content included in at least one topic group and media content beyond the topic group.

According to one or more embodiments of the present disclosure, [Example 8] provides the method of Example 6, update prompt information is further displayed on the content presentation interface, and the update prompt information indicates that there is updated media content in a topic group corresponding to the content presentation interface.

According to one or more embodiments of the present disclosure, [Example 9] provides an interface display apparatus, including:
a first display module, configured to display an entry interface, the entry interface including a topic group interface trigger control;
a second display module, configured to display, in response to a trigger operation for the topic group interface trigger control, a topic presentation page of a topic group corresponding to the topic group interface trigger control; and
a presentation module, configured to present at least one piece of media content on the topic presentation page, the at least one piece of media content including media content posted by a group member joining in the topic group, and media content posted by an out-of-group member without joining in the topic group.

According to one or more embodiments of the present disclosure, [Example 10] provides a media content posting apparatus, including:
a display module, configured to display, on a posting interface, a posting control and at least one piece of target topic information corresponding to media content to be posted;
a determination module, configured to determine a target topic group corresponding to the target topic information based on the target topic information; and
a posting module, configured to post, in response to a trigger operation for the posting control, the media content to be posted to a topic presentation page of the target topic group.

According to one or more embodiments of the present disclosure, [Example 11] provides a media content presentation apparatus, including:
a presentation module, configured to present target media content on a content presentation interface corresponding to a target user, the content presentation interface including a display control; and
a display module, configured to display, in response to a trigger operation for the display control, a topic presentation page corresponding to the target media content, the topic presentation page being a presentation interface of a topic group to which the target media content presented on the content presentation interface belongs, and the target user including a group member in the belonging topic group and an out-of-group member outside the belonging topic group.

According to one or more embodiments of the present disclosure, [Example 12] provides an electronic device, including:
one or more processing apparatuses; and
a storage apparatus, configured to store one or more programs, wherein
when the one or more programs are executed by the one or more processing apparatuses, the one or more processing apparatuses are caused to implement the method according to any of Example 1 to Example 8.

According to one or more embodiments of the present disclosure, [Example 13] provides a storage medium, including computer-executable instructions, wherein the computer-executable instructions, when executed by a computer processor, are configured to execute the method according to any of Example 1 to Example 8.

What have been described above are only preferred embodiments of the present disclosure and illustrations of the technical principles employed. It should be understood by those skilled in the art that, the disclosure scope involved in the preset disclosure is not limited to the technical solutions formed by specific combinations of the above technical features, and meanwhile should also include other technical solutions formed by any combinations of the above technical features or equivalent features thereof without departing from the concept of the disclosure, for example, technical solutions formed by mutual replacement of the above features with technical features having similar functions disclosed in the present disclosure (but is not limited to).

In addition, although various operations are described in a particular order, this should not be understood as requiring that these operations are executed in the particular order shown or in a sequential order. In certain environments, multitasking and parallel processing may be advantageous. Similarly, although several specific implementation details have been included in the above discussion, these should not be construed as limiting the scope of the present disclosure. Some features that are described in the context of separate embodiments may also be implemented in combination in a single embodiment. Conversely, various features that are described in the context of a single embodiment may also be implemented in a plurality of embodiments separately or in any suitable sub-combination.

Although the present topic has been described in language specific to structural features and/or methodological actions, it should be understood that the topic defined in the appended claims is not necessarily limited to the specific features or actions described above. Rather, the specific features and actions described above are merely example forms for implementing the claims.

## Claims

1. An interface display method, comprising:
displaying an entry interface, the entry interface comprising a topic group interface trigger control;
in response to a trigger operation for the topic group interface trigger control, displaying a topic presentation page of a topic group corresponding to the topic group interface trigger control; and
presenting at least one piece of media content on the topic presentation page, the at least one piece of media content comprising media content posted by a group member joining in the topic group, and media content posted by an out-of-group member without joining in the topic group.

2. The method according to claim 1, wherein the topic presentation page further comprises identification information, and the identification information identifies an association relationship between a poster of corresponding media content and the topic group.

3. The method according to claim 1, wherein displaying the entry interface comprises:
displaying a media content playback interface, the media content playback interface comprising at least one topic group interface trigger control; or
displaying a group list interface, the group list interface comprising at least one topic group interface trigger control.

4. The method according to claim **1,** wherein the topic presentation page comprises an interaction control of media content.

5. A media content posting method, comprising:
displaying, on a posting interface, a posting control and at least one piece of target topic information corresponding to media content to be posted;
determining a target topic group corresponding to the target topic information based on the target topic information; and
in response to a trigger operation for the posting control, posting the media content to be posted to a topic presentation page of the target topic group.

6. A media content presentation method, comprising:
presenting target media content on a content presentation interface corresponding to a target user, the content presentation interface comprising a display control; and
in response to a trigger operation for the display control, displaying a topic presentation page corresponding to the target media content, the topic presentation page being a presentation interface of a topic group to which the target media content presented on the content presentation interface belongs, and the target user comprising a group member in the belonging topic group and an out-of-group member outside the belonging topic group.

7. The method according to claim 6, wherein the target media content comprises media content posted by a group member joining in the topic group on the topic presentation page of the topic group, the content presentation interface is an interface for presenting a media content stream to the target user, and the media content stream presented on the content presentation interface comprises target media content comprised in at least one topic group and media content beyond the topic group.

8. The method according to claim 6, wherein update prompt information is further displayed on the content presentation interface, and the update prompt information indicates that there is updated media content in a topic group corresponding to the content presentation interface.

9. An interface display apparatus, comprising:
a first display module, configured to display an entry interface, the entry interface comprising a topic group interface trigger control;
a second display module, configured to display, in response to a trigger operation for the topic group interface trigger control, a topic presentation page of a topic group corresponding to the topic group interface trigger control; and
a presentation module, configured to present at least one piece of media content on the topic presentation page, the at least one piece of media content comprising media content posted by a group member joining in the topic group, and media content posted by an out-of-group member without joining in the topic group.

10. A media content posting apparatus, comprising:
a display module, configured to display, on a posting interface, a posting control and at least one piece of target topic information corresponding to media content to be posted;
a determination module, configured to determine a target topic group corresponding to the target topic information based on the target topic information; and
a posting module, configured to post, in response to a trigger operation for the posting control, the media content to be posted to a topic presentation page of the target topic group.

11. A media content presentation apparatus, comprising:
a presentation module, configured to present target media content on a content presentation interface corresponding to a target user, the content presentation interface comprising a display control; and
a display module, configured to display, in response to a trigger operation for the display control, a topic presentation page corresponding to the target media content, the topic presentation page being a presentation interface of a topic group to which the target media content presented on the content presentation interface belongs, and the target user comprising a group member in the belonging topic group and an out-of-group member outside the belonging topic group.

12. An electronic device, comprising:
one or more processing apparatuses; and
a storage apparatus, configured to store one or more programs, wherein
when the one or more programs are executed by the one or more processing apparatuses, the one or more processing apparatuses are caused to implement the method according to any of claims 1-8.

13. A storage medium, comprising computer-executable instructions, wherein the computer-executable instructions, when executed by a computer processor, are configured to execute the method according to any of claims 1-8.
